Europäisches Patentamt

(19) European Patent Office

Office européen des brevets

(11) Veröffentlichungsnummer: **0 095 689**
**B1**

(12) **EUROPÄISCHE PATENTSCHRIFT**

(45) Veröffentlichungstag der Patentschrift:
01.04.87

(51) Int. Cl.⁴: **A 01 F 15/00**

(21) Anmeldenummer: **83105056.2**

(22) Anmeldetag: **21.05.83**

(54) **Rundballenpresse mit einem einen Guteinlass aufweisenden Ballenpressraum.**

(30) Priorität: **28.05.82 US 382886**
**28.05.82 US 382885**
**28.05.82 US 382882**

(43) Veröffentlichungstag der Anmeldung:
**07.12.83 Patentblatt 83/49**

(45) Bekanntmachung des Hinweises auf die Patenterteilung:
**01.04.87 Patentblatt 87/14**

(84) Benannte Vertragsstaaten:
**DE FR GB IT SE**

(56) Entgegenhaltungen:
**US - A - 2 096 990**
**US - A - 2 336 491**

(73) Patentinhaber: **DEERE & COMPANY, 1 John Deere Road,
Moline Illinois 61265 (US)**

(72) Erfinder: **Anstey, Dennis, Rural Route 4 Box 188a,
Ottumwa Iowa 52501 (US)**
Erfinder: **Soteropulos, Gust Steve, 345 E. Alta Vista,
Ottumwa Iowa 52501 (US)**
Erfinder: **Meiers, Gerald Franklyn, 1014 Chester,
Ottumwa Iowa 52501 (US)**

(74) Vertreter: **Feldmann, Bernhard et al, DEERE &
COMPANY European Office, Patent Department
Steubenstrasse 36-42 Postfach 503,
D-6800 Mannheim 1 (DE)**

## Beschreibung

Die Erfindung betrifft eine Rundballenpresse mit einem einen Guteinlass aufweisenden und in seiner Grösse veränderlichen Ballenpressraum, der aus umlaufenden, über Walzen geführten endlosen Riemen gebildet und von Seitenwänden seitlich begrenzt und von Räumen benachbart wird, wobei der Abstand zwischen den Seitenwänden fast vollkommen von den Riemen eingenommen ist, zwischen den Riemen Spalte vorgesehen sind und das Erntegut ohne Vorverdichtung zwischen zwei Trums der Riemen eingespeist wird.

Bei einer bekannten Rundballenpresse (US-A-4 252 057) verläuft der Ballenpressraum beim Beginn einer Ballenbildung keilförmig, und das Erntegut wird ohne Verdichtung zwischen die den Ballenpressraum begrenzenden Riemen geführt. Die Riemen sind um entsprechende Antriebswalzen geführt, die gemeinsam mit anderen Walzen derart angeordnet sind, dass der anfangs keilförmige Ballenpressraum sich ausdehnen kann, um den immer grösser werdenden Rundballen aufnehmen zu können. Bei der anfänglichen Ballenbildung wirbelt das Erntegut noch frei in dem keilförmigen Bereich und wird erst bei weiterer Zufuhr von Erntegut zu einem kompakten Ballenkern gepresst.

Der mit dieser bekannten Rundballenpresse einhergehende Nachteil ist darin zu sehen, dass das Erntegut Umwicklungen an den Walzen, und zwar insbesondere an den Antriebswalzen, und Verstopfungen in den von den Trums der Riemen umschlossenen Räumen hervorruft.

Die der Erfindung zugrunde liegende Aufgabe wird darin gesehen, derartige Verstopfungen und Umwicklungen zu vermeiden.

Diese Aufgabe ist erfindungsgemäss dadurch gelöst worden, dass die Spalte nicht grösser als 1,45 cm sind, der lichte Abstand zwischen den Seitenwänden zu ca. 90% bedeckt ist und einander entsprechende Kanten benachbarter Riemen maximal ca. 20 cm voneinander entfernt sind.

Auf diese Weise wird das Erntegut davon abgehalten, die Walzenoberflächen zu beschlagen bzw. in die von den Trums umgebenen Räume einzudringen, wobei die Riemenabmessungen aber so gehalten sind, dass deren Laufgenauigkeit und deren Lebensdauer nicht nachteilig beeinflusst werden. Da das Erntegut also in dem Ballenpressraum gehalten wird, unterbleiben die Verstopfungen und Umwicklungen.

Um bei einer derartigen Riemenanordnung einen guten Riemenlauf zu gewährleisten, wird nach einem weiteren Merkmal der Erfindung vorgeschlagen, zwischen benachbarten Riemen Führungsleisten anzuordnen.

Bei einer Rundballenpresse mit an den Ballenpressraum angrenzenden weiteren Räumen, die sich unter Umständen aus der Riemenführung ergeben können, weist mindestens einer von diesen wenigstens eine seitliche Öffnung auf, damit in diese eventuell eingedrungenes Erntegut dort gesammelt und selbsttätig oder von Hand entfernt werden kann und nicht zu Umwicklungen der Walzen von innen her führt, wobei diese Öffnungen am einfachsten dadurch erreicht werden können, dass die Riemen zumindest teilweise ausserhalb von vertikalen oder nahezu vertikalen Seitenwänden verlaufend angeordnet sind. Letztlich ergibt sich ein sehr guter Riemenlauf, wenn bei mindestens einer der die Riemen führenden Walzen die Seitenkanten der mit dem Gut in Berührung kommenden Teile der Riemen einen Abstand zur Walze aufweisen, wobei darüber hinaus sich in diesem Spalt kein Erntegut festklemmen kann.

In den Zeichnungen ist ein nachfolgend näher beschriebenes Ausführungsbeispiel einer Rundballenpresse mit den Merkmalen der Erfindung dargestellt. Es zeigt:

Fig. 1 eine Ansicht der rechten Seite der Rundballenpresse

Fig. 2 eine ähnliche Ansicht wie Fig. 1 mit offenem Ballenpressraum und einem Ballen im Anfang seiner Wickelphase

Fig. 3 eine Teilansicht eines oberen Vorderteils der Rundballenpresse von Fig. 1

Fig. 4 eine Teilansicht eines unteren Vorderteils der Rundballenpresse von Fig. 1

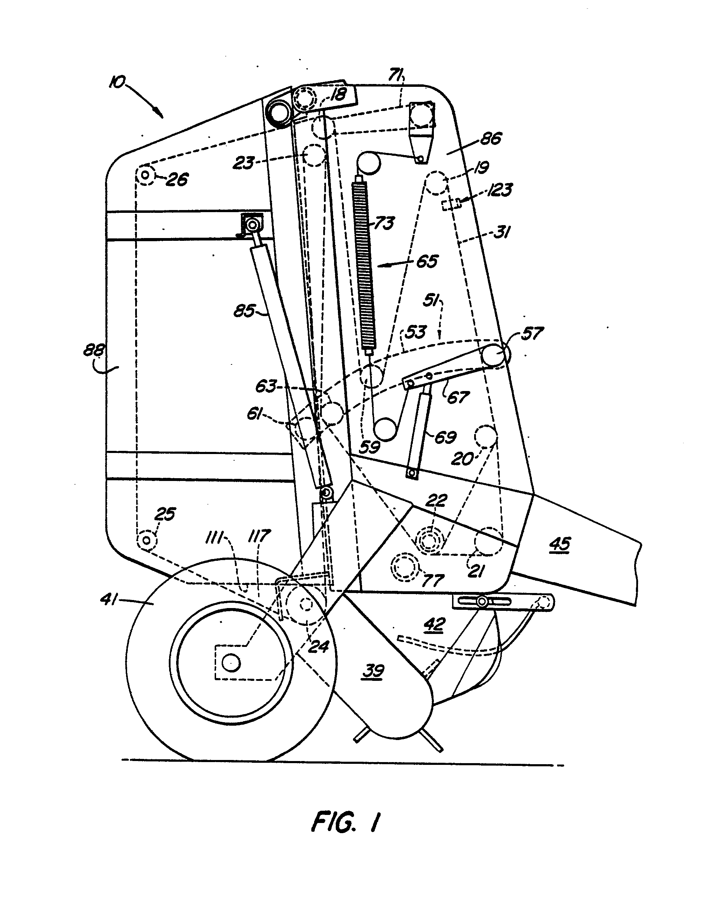

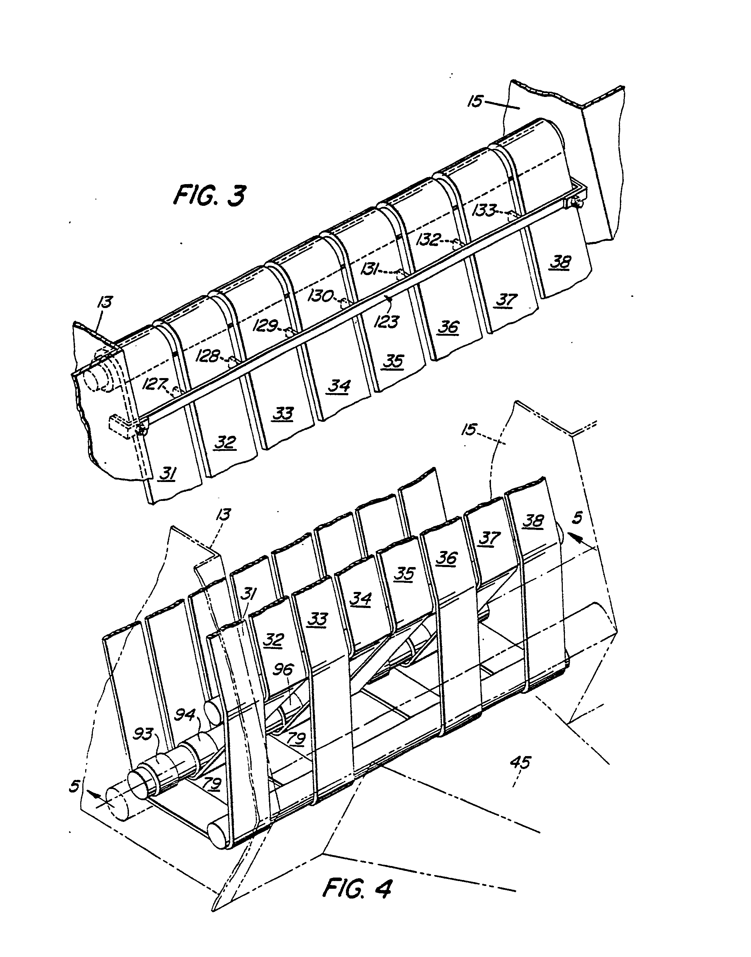

Fig. 5 einen Schnitt nach der Linie 5–5 in Fig. 4 Die in Fig. 1 dargestellte Rundballenpresse weist einen Rahmen 10 mit einem Paar sich gegenüberliegender Seitenwände 13, 15, mehrere Walzen 18 bis 26, die drehbar an den Seitenwänden 13, 15 und sich zwischen diesen erstreckend montiert sind, eine Vielzahl endloser, nebeneinander gelegener Riemen 31 bis 38, die auf den Walzen 18 bis 26 aufliegen und zwischen den Seitenwänden 13, 15 einen ausdehnbaren Ballenpressraum 40 zum Formen eines zylindrischen Ballens bilden, und einen Erntegutaufnehmer 39 zum Zuführen des Ernteguts vom Boden in den Ballenpressraum 40 auf. Ein Paar Leitbleche 42 (nur ein einziges ist gezeigt) ist an den jeweiligen Enden des Erntegutaufnehmers 39 angebracht. Der Rahmen 10 der Rundballenpresse wird von Rädern 41 getragen (lediglich ein einziges ist dargestellt) und von einem nicht gezeigten Ackerschlepper über eine Zugdeichsel 45 gezogen.

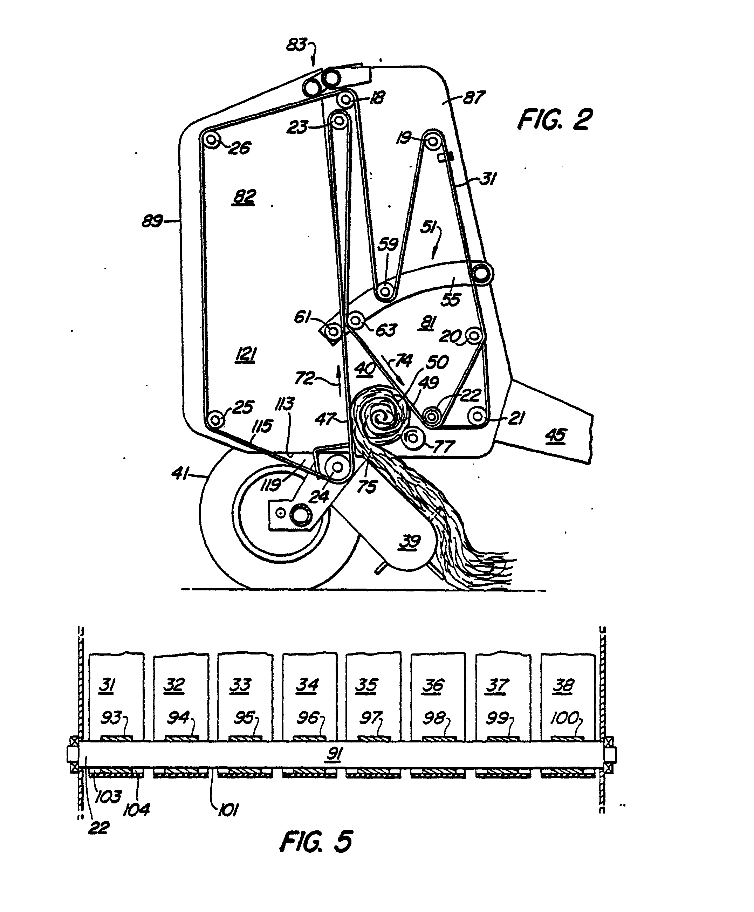

Die Riemen 31 bis 38 beinhalten ein Paar im wesentlichen emporgerichtete gegenüberliegende Teilstücke 47 und 49, die den Ballenpressraum 40 bilden und sich zwischen einer Walze 61 und der Walze 24 bzw. zwischen einer Walze 63 und der Walze 22 erstrecken. Wie in Fig. 2 gezeigt, ist die Grösse des Ballenpressraumes 40 und die Länge der Teilstücke 47 und 49 durch eine Riemenspannvorrichtung 51 veränderbar, um sich dem beim Wickelvorgang sich vergrössernden Durchmesser des Ballens 50 anpassen zu können. Die Riemenspannvorrichtung 51 beinhaltet ein Paar Arme 53 und 55, die schwenkbar an einem Halter 57 befestigt sind, eine Riemenspannwalze 59, die zwischen den Armen 53 und 55 gehalten ist, und die beiden den Ballenpressraum 40 begrenzenden Walzen 61 und 63, die zwischen den Armen 53 und 55 angeordnet sind. Die Riemenspannvorrichtung 51 ist auf jeder Seite der Rundballenpresse durch ein Paar Vorspannvorrichtungen 65 (nur eine ist in Fig. 1 gezeigt) vorgespannt, die jeweils einen Spannarm 67, der an dem einen Ende des Halters 57 befestigt ist, einen Hydraulikzylinder 69, einen Winkelhebel 71 und eine Feder 73, die zwischen dem Winkelhebel 71 und dem Spannarm 67 gelegen ist, aufweisen.

Aus Fig. 2 geht ferner hervor, dass das Erntegut durch einen offenen oder nicht eingeengten Einlass 75 ohne nennenswerte Verdichtung von dem Erntegutaufnehmer 39 dem Ballenpressraum 40 zuführbar ist. Der Einlass 75 wird durch die untersten sich gegenüberliegenden, die Riemen führenden Walzen 24, 22, den Erntegutaufnehmer 39 und eine Abstreifwalze 77 begrenzt. Die Abstreifwalze 77 trägt zum anfänglichen Bilden des Ballenkerns bei, trägt teilweise das Gewicht des Ballens während seiner Bildung und streift Erntegut von dem Teilstück 49 ab, um den Verlust von Erntegut aus dem Ballenpressraum 40 heraus zu verhindern bzw. zu vermindern.

Die Riemen 31 bis 38 werden durch einen herkömmlichen, die Walzen 19 und 22 antreibenden, nicht gezeigten Antrieb, der mit einer Zapfwelle des zum Ziehen der Presse benutzten Ackerschleppers (nicht gezeigt) verbunden ist, in Richtung der Pfeile 72 und 74 in Umlauf versetzt. Die Riemen 31 bis 38 sind, wie aus den Fig. 2 und 4 hervorgeht, abwechselnd um die Walze 20 oder die Walze 21 geführt, um Öffnungen oder Abstände 79 zu bilden, durch die Erntegut austreten kann, bevor es die Walzen umwickeln oder den Aufbau von eingeschlossenem Erntegut in zu dem Ballenpressraum 40 benachbarten Räumen wie dem Raum 81 verursachen kann.

Aus Fig. 1 ist ferner ersichtlich, dass jede Seitenwand 13 und 15 aus Vorderteilen 86 und 87 und rückwärtigen Teilen 88 und 89 gebildet wird. Die rückwärtigen Teile 88 und 89 und die Walzen 24 bis 26 bilden ein Ballenentladegatter 82. Dieses ist zum Auswerfen des Ballens 50 aus dem Ballenpressraum 40, wenn er die gewünschte Ballengrösse erreicht hat, um einen Schwenkpunkt 83 durch die Betätigung zweier Hydraulikzylinder 85 (lediglich einer ist ersichtlich) relativ zu den Vorderteilen 86, 87 drehbeweglich.

Ein Riemenführungsteil 123 (Fig. 1 und 3) ist zwischen den Seitenwänden 13 und 15 fest eingebaut und enthält eine Vielzahl Führungsleisten 127 bis 133, die sich jeweils zwischen den sich benachbarten Riemen 31 bis 38 erstrecken, um zu einer einwandfreien Riemenausrichtung und zu einem einwandfreien Riemenlauf auf den Walzen 18 bis 26 beizutragen.

Im Einsatz wird der Ballen beim Ziehen der Rundballenpresse über das Feld gebildet, wobei das in der Regel in einem Schwad auf dem Boden liegende Erntegut von dem Erntegutaufnehmer 39 aufgenommen und ohne merkliche Verdichtung durch den offenen Einlass 75 nach oben in den Ballenpressraum 40 gegeben wird. Das Erntegut wird dann von dem sich nach oben bewegenden Teilstück 47 erfasst und beginnt sich dort im Uhrzeigerdrehsinn zu drehen (Fig. 2). Diese Drehbewegung wird zumindest später von dem sich nach unten bewegenden Teilstück 49 unterstützt. Sobald das Erntegut den untersten Abschnitt des Teilstückes 49 erreicht, wird es von der im Gegenuhrzeigerdrehsinn rotierenden Abstreifwalze 77 ergriffen, die ebenfalls die Drehbewegung des Ernteguts im Uhrzeigerdrehsinn unterstützt, wobei weiteres, durch den Einlass 75 in den Ballenpressraum eingespeistes Erntegut zur Bildung eines Ballenkerns erfasst wird. Da beim weiteren Zuführen von Erntegut der Ballenkern im Durchmesser wächst, wird er durch die gespannten Riemen verdichtet, wobei die Spannung, die den Riemen durch die Riemenspannvorrichtung 51 und die Vorspannvorrichtung 65 auferlegt ist, ansteigt und letzlich die Arme 53 und 55 mit der Riemenspannwalze 59 und den Walzen 61, 63 im Uhrzeigerdrehsinn verschwenkt werden. Mit der Aufwärtsbewegung der Riemenspannwalze 59 und der Walzen 61 und 63 werden die Teilstücke 47 und 49 in ihrer wirksamen Länge verlängert und der Durchmesser des Ballenpressraumes 40 dadurch vergrössert. Mit ansteigendem Ballendurchmesser vergrössert sich der Ballenpressraum 40 weiter entgegen der Wirkung der die Riemen spannenden Federn 73 und der Hydraulikzylinder 69. Die Spannung der Riemen kann zusätzlich durch den Austausch eines Druckmediums zwischen dem oberen und unteren Ende der hierzu doppelt wirkend ausgebildeten Hydraulikzylinder 69 über ein einstellbares Druckbegrenzungsventil (nicht gezeigt) auch reguliert werden, um die Ballendichte zu variieren. Wenn der Ballen 50 seinen vorbestimmten Durchmesser erreicht hat, werden die Hydraulikzylinder 85 zum öffnen des Ballenentladegatters 82 und zum Ablegen des Ballens 50 auf den Boden betätigt.

Der Ballenpressraum 40 weist Seiten auf, die im wesentlichen von den Riemen 31 bis 38 umschlossen werden. Hierbei sind die Riemen 31 bis 38 derart bemessen und voneinander entfernt, dass sie mindestens 80% und vorzugsweise über 90% des Bereichs zwischen den Seitenwänden 13 und 15 ab- bzw. bedecken. Die Abstände benachbarter Riemen und der aussen liegenden Riemen 31 und 38 sind derart, dass lediglich ausreichend Raum für den Durchtritt der schmalen, leistenförmigen Führungsleisten, die zwischen aneinandergrenzenden Riemen und gegebenenfalls zwischen den aussen liegenden Riemen 31 und 38 und den Seitenwänden 13, 15 anzuordnen sind, verbleibt. Die Führungsleisten helfen, einen einwandfreien Riemenlauf und eine einwandfreie Riemenausrichtung der Riemen auf den Walzen zu erhalten. Dadurch, dass der Ballenpressraum im wesentlichen von den Riemen umfasst wird, tritt erstens weniger Erntegut aus dem Ballenpressraum aus, das sich sonst in dem Ballenpressraum benachbarten Räumen ansammeln und dort zu Verstopfungen führen könnte, und wird zweitens erreicht, dass kleinere Abschnitte der Walzen dem Erntegut ausgesetzt sind, wodurch ein mögliches Aufwickeln von Erntegut auf den Walzen verringert wird.

Bei einem bevorzugten Ausführungsbeispiel mit sechs Riemen von je 17,8 cm Breite, einem Abstand zwischen den Riemen von 1,28 cm und einem Abstand der äusseren Riemen zu den Seitenwänden von jeweils 2,0 cm beträgt die Gesamtbreite zwischen den Seitenwänden 117 cm. Hierbei ist jede Führungsleiste 127 bis 133 0,5 cm stark. Mit Riemen dieser Grösse und dem vorgegebenen Abstand zwischen den Seitenwänden werden ungefähr 91% der Entfernung zwischen den Seitenwänden 13 und 15 überbrückt.

Bei einem weiteren bevorzugten Ausführungsbeispiel mit einem Abstand der Seitenwände zueinander von 156,5 cm, mit 8 Riemen von je 17,8 cm Breite, einem Abstand der Seitenwände 13, 15 zu den unmittelbar angrenzenden Riemen 31, 38 von 2,0 cm, einem Abstand jedes Riemens von dem unmittelbar angrenzenden Riemen von 1,45 cm und einer Stärke der Führungsleisten von 0,5 cm werden ungefähr 91% der Entfernung zwischen den Seitenwänden durch die Riemen abgedeckt.

Bei einer derartigen Umfassung des Ballenpressraumes bei der beschriebenen Rundballenpresse können Ballen aus verschiedensten Ernteprodukten (z.B. Heu, Stroh und anderem Halm- oder Blattgut) bei fast jedem Feuchtigkeitsgehalt und unter weiteren Erntebedingungen bei einer verringerten Neigung zum Verstopfen oder Verklemmen des Ballenpressraumes und zum Umwickeln der Walzen 18 bis 26 mit Erntegut gebildet werden.

Diese Ausbildung ermöglicht, dass Heu oder Gras mit einem Feuchtigkeitsgehalt von 10 bis zu 70 und 80% gepresst werden kann, so dass ungeschnittenes Gras, das einen Feuchtigkeitsgehalt zwischen 70 und 80% hat, unmittelbar nach dem Mähen pressbar ist. Dies hat sich z.B. in Gegenden wie Grossbritannien als besonders zweckmässig herausgestellt, in denen man Heu (z.B. Raygras) sofort nach dem Mähen presst und den Ballen in einer Plastikhülle unterbringt, um Silage herzustellen. Mit den bisherigen Rundballenpressen war das Pressen von Heu bei Feuchtigkeitsgraden zwischen 25 und 50% gewöhnlich störungsbehaftet. Anderseits ist das Pressen von Heu und Stroh mit niedriger Feuchtigkeit mit herkömmlichen Rundballenpressen auch als äusserst schwierig erkannt worden, weil das Erntegut dann dazu neigt, in kleine Teile zu zerbrechen und sich in den dem Ballenpressraum benachbarten Räumen anzusammeln. Mit der hier beschriebenen Rundballenpresse kann derartiges Erntegut mit einer bedeutend verringerten Neigung zum Verstopfen gepresst werden.

Es wird nunmehr auf die Fig. 2 und insbesondere auf die Fig. 4 und 5 Bezug genommen, die ein bevorzugtes Ausführungsbeispiel einer Rundballenpresse mit einer selbstreinigenden, den Antrieb übertragenden Walze 22 veranschaulichen.

Die Walze 22 wird von einem zylindrischen Kern 91 (z.B. aus Stahl) und Mitteln, um die Längskanten der Riemen 31 bis 38 ausser Berührung mit einer Mantelfläche 101 des Kerns 91 zu halten, gebildet. Diese Mittel können Gummibüchsen 93 bis 100 sein, die auf die Mantelfläche 101 des Kerns 91 aufgeklebt sind.

Es ist auch denkbar, dass die Stützmittel durch jede andere Art erhöhter Oberflächen zum Tragen des mittleren Abschnitts oder Teile davon jedes Riemens derart, dass die Riemenkanten normalerweise ausser Berührung mit dem Kern gehalten werden, gebildet werden können. Der Kern könnte etwa mit erhöhten Oberflächen einstückig gegossen oder auf andere Art hergestellt werden. Die erhöhten Oberflächen unter jedem Riemen können durchgehend oder unterbrochen sein.

Jede Gummibüchse 93 bis 100 ist derart auf dem Kern 91 angeordnet, dass sie unter dem jeweils zugehörigen Riemen 31 bis 38 liegt. Die Breite der Riemen 31 bis 38 und die Breite der darunterliegenden Gummibüchsen 93 bis 100 ist aber derart gewählt, das jeder Riemen sich seitlich über die darunterliegende Gummibüchse erstreckt und dadurch ein Paar Fugen 103, 105 bildet, die von der Mantelfläche 101 des Kerns 91, der Innenfläche des Riemens und der äusseren Kante der Gummibüchse umrissen werden. Beispielsweise sind in einer bevorzugten Ausbildungsform die Riemen 17,8 cm und die Gummibüchsen 12,7 cm breit, die eine Fuge in einer Länge von ungefähr 2,5 cm ergeben. Die Stärke der Gummibüchse beträgt 0,32 cm, woraus sich eine Fuge von weniger als 3,2 mm in der Höhe (zwischen der Mantelfläche 101 und der Innenfläche des Riemens) ergibt, weil der überhängende Teil der Riemen dazu neigt, sich auf die Mantelfläche 101 zuzubiegen. Die Stärke der Gummibüchsen 93 bis 100 sollte ausreichend sein, um eine Fuge entstehen zu lassen und um diese zu erhalten. Die Stärke ist den verschiedenen Riemenwerkstoffen anzupassen.

Dadurch, dass auf der Walze 22 Gummibüchsen unter jedem Riemen liegen, ergibt sich eine bedeutend geringere Neigung für das Erntegut, sich um die Walze 22 zu wickeln. Ohne die Gummibüchsen stützt sich der Ballen zumindest während eines Teils des Ballenbildungsvorgangs auf der Walze 22 ab und drückt das Teilstück 49 gegen diese, so dass das Erntegut, das zwischen den Riemen 31 bis 38 von dem Ballenpressraum 40 aus hindurchgelangt, in der Klemmstelle zwischen dem Teilstück 49 und der Walze 22 eingezwängt werden kann. Durch die gewählte Ausbildung der Fugen wird die Bildung einer Klemmstelle ganz oder zumindest teilweise vermieden, so dass das Erntegut wesentlich weniger dazu neigt, unter den Kanten der Riemen eingeklemmt und festgehalten zu werden. Wenn noch einiges Erntegut zwischen den Riemen 31 bis 38 hindurchgelangen sollte, kann es durch die Öffnungen 79, die sich aus der versetzten Anordnung der Riemen 31 bis 38 auf den Walzen 21, 22 ergeben, herausfallen. Es kommt hinzu, dass durch die ausgeschaltete oder zumindest sehr verringerte Neigung der Enden des Ernteguts, unter den Kanten der Riemen festgehalten zu werden, das Erntegut weniger aus dem in dem Ballenpressraum geformten Ballen herausgezogen oder abgeschält wird und somit Ernteguntverluste verringert werden. Durch die Verringerung der Wickelneigung des Ernteguts um die Walze 22, was bei allen Ernteprodukten und Erntebedingungen zu geringem oder gar keinem Riemenbruch und gutem Riemenlauf führt, trägt dieses Merkmal ausserdem wesentlich zu einer störungsfreien Pressenarbeit bei. Dies ist besonders vorteilhaft beim Pressen von Ernteprodukten, wie Hochfeuchtigkeitsheu oder extremem Niederfeuchtigkeitsheu oder Stroh, bei dem eine grosse Neigung des Ernteprodukts besteht, sich um die Walzen anzusammeln und evtl. die Riemen zu verstopfen oder festzuhalten. Selbstverständlich können auch andere Walzen (z.B. Walze 61) als die Walze 22, die mit Ernteprodukten in Berührung kommen, mit Abstandsmitteln für die Riemenkanten ausgestattet werden.

In den Fig. 1 und 2 ist ausserdem eine vorteilhafte Ausbildung der Rundballenpresse mit einem selbstreinigenden Ballenentladegatter 82 gezeigt. Dieses wird von den rückwärtigen Teilen 88 und 89 der Seitenwände 13 und 15 und den Walzen 24 bis 26 gebildet.

Die Walzen 24 und 25 sind in der Nähe der unteren Kanten 111 und 113 der rückwärtigen Teile 88 und 89 angebracht. Hierbei ist die Walze 24 unterhalb der unteren Kanten 111 und 113 am Rahmen 10 und die Walze 25 im Bereich des rückwärtigen unteren Endes der rückwärtigen Teile 88 und 89 angeordnet. Ein Teilstück 115 der Riemen 31 bis 38, das sich zwischen den Walzen 24 und 25 erstreckt, verläuft dann teilweise unter den unteren Kanten 111, 113 und bildet Öffnungen 117, 119 auf jeder Seite der Rundballenpresse. Diese führen in einen Raum 121, der von den Riementeilstücken, die sich um die Walzen 23 bis 26 erstrekken, und den rückwärtigen Teilen 88, 89 umschlossen wird. Während des Ballenbildungsvorgangs können Teile des Erntegutes u.U. aus dem Ballenpressraum 40 in den Raum 121 gelangen, wenn es zwischen benachbarten Riemen 31 bis 38 hindurchfällt. Wäre keine Entnahme- oder Austrittsmöglichkeit gegeben, so würde das dort sich ansammelnde Erntegut in dem Raum 121 sich um die Walzen wickeln, was zu Riemenschäden führen kann, und letztlich diesen Raum verstopfen. Die besondere Anordnung der Öffnungen 117 und 119 bewirkt, dass das evtl. in den Raum 121 gelangende Erntegut während des Betriebes durch die Riemenbewegung einschliesslich der Riemenschwingungen zu den Seiten bewegt wird und dort von selbst herausfällt. Etwaiges, noch in dem Raum verbleibendes Restgut wird in keinem Falle die Arbeitsleistung der Rundballenpresse beeinträchtigen. Die Öffnungen 117 und 119 sind dabei so vorgesehen, dass sie sich mit seitlichem Abstand neben den Rädern 41 befinden, so dass eine Unfallgefahr durch die umlaufenden Riemen ganz oder zumindest weitgehend ausgeschaltet ist. Bei bestimmten Rundballenpressenausbildungen kann es aber auch zweckmässig sein, die Öffnungen an anderen, auch einen manuellen Zugang ermöglichenden Stellen vorzusehen.

## Patentansprüche

1. Rundballenpresse mit einem einen Guteinlass (75) aufweisenden und in seiner Grösse veränderlichen Ballenpressraum (40), der aus umlaufenden, über Walzen (18 bis 26) geführten endlosen Riemen (31 bis 38) gebildet und von Seitenwänden (13, 15) seitlich begrenzt und von Räumen (121, 81) benachbart wird, wobei der Abstand zwischen den Seitenwänden (13, 15) fast vollkommen von den Riemen (31 bis 38) eingenommen ist, zwischen den Riemen (31 bis 38) Spalte vorgesehen sind und das Erntegut ohne Vorverdichtung zwischen zwei Trums (47, 49) der Riemen (31 bis 38) eingespeist wird, dadurch gekennzeichnet, dass die Spalte nicht grösser als 1,45 cm sind, der lichte Abstand zwischen den Seitenwänden (13, 15) zu ca. 90% bedeckt ist und einander entsprechende Kanten benachbarter Riemen (31 bis 38) maximal ca. 20 cm voneinander entfernt sind.

2. Rundballenpresse nach Anspruch 1, dadurch gekennzeichnet, dass zwischen den Riemen (31 bis 38) Führungsleisten (127 bis 133) vorgesehen sind.

3. Rundballenpresse nach Anspruch 1, dadurch gekennzeichnet, dass mindestens einer der Räume (121, 81) wenigstens eine seitliche Öffnung (117, 119) aufweist.

4. Rundballenpresse nach einem oder mehreren der vorgenannten Ansprüche, dadurch gekennzeichnet, dass die Riemen (31 bis 38) teilweise ausserhalb der Seitenwände (13, 15) verlaufend angeordnet sind.

5. Rundballenpresse nach einem oder mehreren der vorgenannten Ansprüche, dadurch gekennzeichnet, dass bei mindestens einer der die Riemen (31 bis 38) führenden Walzen (18 bis 26, 61, 63) die Seitenkanten der mit dem Gut in Berührung kommenden Teile der Riemen (31 bis 38) einen Abstand zur Walze (22) aufweisen.

## Claims

1. Round baler having a bale chamber (40) with a material inlet (75) and variable in size and which is formed by revolving endless belts (31 to 38) passed over rollers (18 to 26) and is defined laterally by side walls (13, 15) and adjoined by spaces (121, 81), the distance between the side walls (13, 15) being occupied almost completely by the belts (31 to 38), gaps being provided between the belts (31 to 38) and the harvest material being fed in between two strands (47, 49) of the belts (31 to 38) without pre-compression, characterised in that the gaps are not larger than 1.45 cm, the clear interval between the side walls (13, 15) is covered for about 90%, and edges corresponding to one another in adjacent belts (31 to 38) are about 20 cm distant from one another at the most.

2. Round baler according to claim 1, characterised in that guide bars (127 to 133) are provided between the belts (31 to 38).

3. Round baler according to claim 1, characterised in that at least one of the spaces (121, 81) has at least one lateral opening (117, 119).

4. Round baler according to one or more of the preceding claims, characterised in that the belts (31 to 38) are arranged extending partly outside the side walls (13, 15).

5. Round baler according to one or more of the preceding claims, characterised in that in at least one of the rollers (18 to 26, 61, 63) guiding the belts (31 to 38) the lateral edges of those parts of the belts (31 to 38) which come into contact with the material are at a distance from the roller (22).

## Revendications

1. Presse à balles rondes dont la chambre de compactage (40) comprend une entrée pour les produits (75) et a une taille variable, est constituée par des courroies sans fin en mouvement (31 à 38) passant sur des rouleaux (18 à 26) et délimitée latéralement par des parois latérales (13, 15) et dont des chambres (121, 81) sont contiguës, l'intervalle entre les parois latérales (13, 15) étant occupé presqu'entièrement par les courroies (31 à 38), des interstices étant prévus entre les courroies (31 à 38) et les produits de récolte étant introduits sans précompactage entre deux brins (47, 49) des courroies (31 à 38), caractérisée en ce que les interstices ne dépassent pas 1,45 cm, en ce que l'intervalle libre entre les parois latérales (13, 15) est couvert à environ 90% et en ce que des bords mutuellement correspondants de courroies (31 à 38) voisines sont séparés mutuellement par une distance d'environ 20 cm au maximum.

2. Presse à balles rondes suivant la revendication 1, caractérisée en ce que des barrettes de guidage (127 à 133) sont prévues entre les courroies (31 à 38).

3. Presse à balles rondes suivant la revendication 1, caractérisée en ce que l'une au moins des chambres (121, 81) comporte au moins un orifice latéral (117, 119).

4. Presse à balles rondes suivant une ou plusieurs des revendications précédentes, caractérisée en ce que les courroies (31 à 38) sont disposées de façon à s'étendre en partie à l'extérieur des parois latérales (13, 15).

5. Presse à balles rondes suivant une ou plusieurs des revendications précédentes, caractérisée en ce que, pour l'un au moins des rouleaux (18 à 26, 61, 63) sur lesquels passent les courroies (31 à 38), les bords latéraux des parties des courroies (31 à 38) entrant en contact avec les produits sont écartés du rouleau (22).

FIG. 1

FIG. 2

FIG. 5

FIG. 3

FIG. 4